Europäisches Patentamt

(19) European Patent Office

Office européen des brevets

(11) Publication number: **0 051 580**
**B1**

(12) **EUROPEAN PATENT SPECIFICATION**

(45) Date of publication of patent specification: **21.08.85**

(21) Application number: **80900953.3**

(22) Date of filing: **07.05.80**

(86) International application number:
**PCT/SE80/00133**

(87) International publication number:
**WO 81/03164 12.11.81 Gazette 81/27**

(51) Int. Cl.⁴: **B 65 G 57/24**

(54) **A DEVICE FOR VERTICAL TRANSPORT OF GOODS.**

(43) Date of publication of application:
**19.05.82 Bulletin 82/20**

(45) Publication of the grant of the patent:
**21.08.85 Bulletin 85/34**

(84) Designated Contracting States:
**AT CH DE FR GB LI NL**

(56) References cited:
**DE-B-2 620 535**
**SE-C- 200 217**

(73) Proprietor: **PETTERSSON, Kent Gustaf**
**Violvägen 25**
**S-190 60 Balsta (SE)**

(72) Inventor: **PETTERSSON, Kent Gustaf**
**Violvägen 25**
**S-190 60 Balsta (SE)**

(74) Representative: **Lindblad, Sture**
**FAMTEC Box 7574**
**S-103 93 Stockholm (SE)**

Courier Press, Leamington Spa, England.

## Description

### Technical field

The present invention relates to an apparatus for vertical transport of goods, for instance transportation of pieces of packages from a packing line or a conveyor onto a pallet.

### Prior art

Devices for successive lowering a pallet as pieces of packages are moved onto the pallet are previously known in connection with loading of pallets. It is also previously known to use a lifting fork to lower received pieces of packages down onto a pallet, which is not moved during the operation. The previously known devices are often constructed in an unnecessarily complicated way both as far as the mechanical system is concerned as well as concerning the control system. The previously known devices of this type, as illustrated by the structures described in Swedish patent specification No. 200.217 and DE Offenlegungsschrift No. 26 20 535 are used for lowing pieces of packages from a conveyor onto a pallet. According to DE Offenlegungsschrift No. 26 20 535 the apparatus thereof is provided with lifting forks for receiving and lowering pieces of packages onto a pallet, and then specific wipers are used for wiping the pieces of packages off the lifting forks and onto the pallet. For that cycle of operations three separate chain transmissions are used, all driven by its own individual motor, and in one alternative one of said transmissions is replaced by a hydraulic cylinder.

### A short statement of the present invention The technical problem to be solved by the present invention relates to lowering pieces of packages from an upper level, for instance a conveyor, down to a lower level, for instance a pallet. This operation was previously carried out either manually or by the aid of complicated, voluminous and expensive machines.

The above problem is solved in accordance with the present invention by using one single transmission driven by one single motor for performing the intended cycle of operations. An endless transmission belt or chain is used for co-operating with one single electrical motor for obtaining both a horizontal and a vertical movement when the apparatus performs a cycle of operations. Preferably, counterweights are used in order to balance the weight of the lifting device according to the invention.

The advantages obtained by the present invention are among other things that a relatively simple mechanical structure is obtained, that only a minimum force consumption is necessary, that an uncomplicated electrical control system is used, which all result in a fail-safe and low energy consuming machine having a very low total weight. When carefully choosing the weights of the counterweights used in the machine in relation to the weight of the pieces of packages to be handled by the machine it is possible to use a drive motor of a small size, which results in a low energy consuming structure.

### Description of the figures

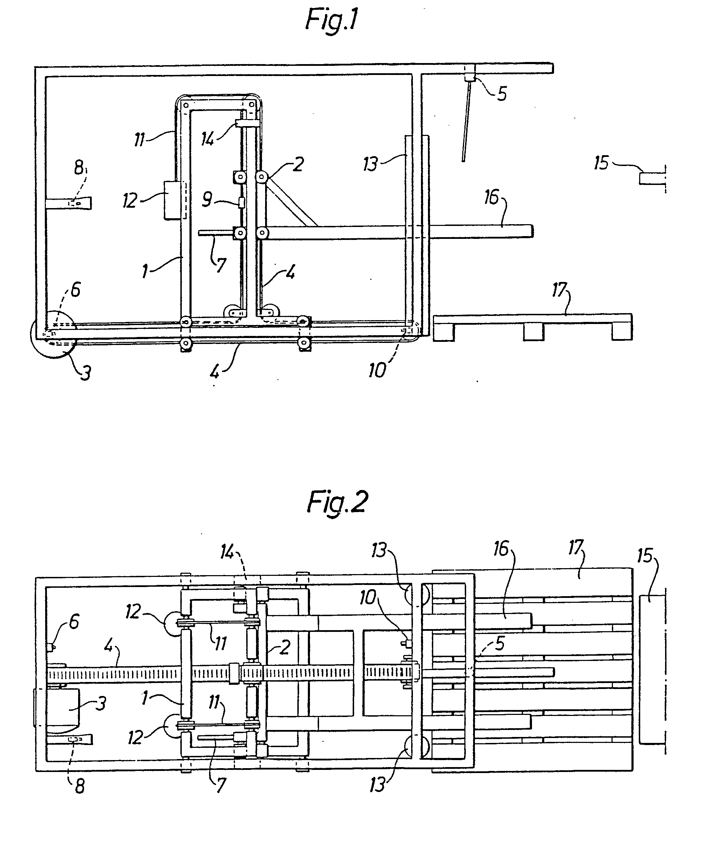

Fig. 1 is illustrating in a schematic side elevational view a preferred embodiment of the device according to the invention, and

Fig. 2 is illustrating in a schematic top elevational view the device according to the invention as illustrated in Fig. 1.

### Description of the preferred embodiment

A preferred embodiment of the invention is illustrated in the Figures and comprises a machine for loading pieces of packages from a packing line 15 down onto a pallet 17. The machine comprises a horizontally travelling waggon 1 provided with a vertically movable lifting device 2 having lifting forks 16 for receiving and lowering the pieces of packages. Counterweights 12 are arranged in connection with the horizontally travelling waggon 1, said counterweights being connected by wires 11 to the vertically movable lifting device 2. By using said counterweights there is only need for a minimum effect to be used both in connection with raising and lowering the lifting forks 16. The transmission means comprises in the preferred embodiment an endless toothed belt 4, which is connected at 9 to the vertically movable lifting device 2 and is driven by one single small electrical motor 3.

In the beginning of an operation cycle the lifting forks 16 are located at the same level as the packing line 15 in a fixed position obtained by the counterweights 12, a manually adjustable mechanical stop 14 and the toothed belt 4, which is braked to stand-still by the still standing (inoperative) electrical motor 3. The horizontally travelling waggon 1 is standing in its forward-most position against a mechanical, resilient stop. The packages coming from the packing line 15 are fed out onto the lifting forks 16 of the machine and abut, when they are fed sufficiently far, a sensing pin connected to a starting impulse switch 5. The starting impulse switch 5 is starting the electrical motor 3. The motor 3 generates a constant, braking torque when the lifting forks 16 of the vertically movable lifting device 2 are lowered, due to the weight of the packages loaded thereon down to a pallet 17 located at a lower level. When the lifting forks 16 have reached the pallet 17 further vertical movement is stopped and the vertically extending part of the cogged belt 4 is fixed. Then, the electrical motor 3 by means of the horizontally extending part of the toothed belt 4 pulls the horizontally travelling waggon 1 backwardly from the pallet 17. Since the vertically movable lifting device 2 is mounted on the horizontally travelling waggon 1 the lifting forks 16 also move backwardly. However, the packages resting on the lifting forks 16 are stopped against support rolls 13, which in the preferred embodiment are fixedly mounted at the side of the lifting forks 16. When the lifting forks 16 are pulled away the packages will rest upon the pallet 17. The horizontally travelling waggon 1 will continue to move backwardly until the tips of the lifting forks 16 are moved into a position between the support rolls 13. Then, the horizontally travelling waggon 1 contacts a change-over switch 6, thereby reversing the polarity of the electrical motor 3.

The vertically movable lifting device 2 will then be pulled upwardly by the aid of the counterweights 12 at a speed determined by the rotational speed of the electrical motor 3, which will act in a braking way during this movement. When the vertically movable lifting device 2 has reached the level of the packing line 15 it is stopped by a manually adjustable mechanical stop 14 and the vertically movable part of the toothed belt 4 is fixed and the electrical motor 3 will, via the horizontally extending part of the toothed belt 4, draw the horizontally travelling waggon 1 forwardly until it reaches a mechanical, resilient stop and a limit switch 10, which both stops and reverses the polarity of the electrical motor 3. The lifting forks 16 are now located at the packing line 15 ready to receive new packages.

In the next cycle of operations the vertically movable lifting device 2 and the lifting forks 16 thereof are lowered (supplied with packages) till they are stopped by the packages previously loaded on the pallet 17. The horizontally travelling waggon 1 will then, via the horizontally extending part of the toothed belt 4, be drawn backwardly by the electrical motor 3. The packages will be stopped by the support rolls 13 and when the lifting forks 16 have been moved completely inside the space between said rolls the pallet 17 is loaded by two layers of packages.

In the above indicated way the loading operation will continue until the desired top level has been reached.

At the top level there is provided a blocking switch 8 at the rearmost part of the machine in such a way that it is contacted by a contact arm 7 fixedly mounted on the vertically movable lifting device 2 and stops the electrical motor 3 when the lifting forks 16 are provided in a backward position.

Then, when the loaded pallet has been removed, either manually or automatically, and been replaced by an empty pallet the machine may again be started, the lifting forks 16 will return to the starting position at the packing line 15. If desired, also said starting operation may be automatic.

Modified embodiments

Even though a presently preferred embodiment of the invention above has been described with reference to the attached Figures the persons skilled in the applicable art realize that the device may be modified within the frame of the accompanying claims. Hence, the motor has been illustrated by an electrical motor even though it is possible to use another driving source, such as a compressed air motor, which also can be located at any place along the machine. The transmission belt has been illustrated by a toothed belt, but of course, chains or wires may also be used alternatively. Of course, also the counterweights may be replaced by force balancing blocks or resilient means, such as spring means and the like, since the effect thereof is only to counterbalance the weight of the vertically movable lifting device. The mentioned support rolls 13 may, of course, also be replaced by other suitable means for wiping off the packages onto the pallet or previously loaded layers of packages.

Industrial use

The present invention is useful in connection with any type of industry wherein packages, boxes, containers or other articles should be transferred from an upper level, for instance a packing line or a conveyor, down to a lower level, for instance a pallet or a stack of previously loaded packages. Since the invention provides a simple, cheap and reliable machine of a universally useful type the industrial use thereof is extensive.

**Claims**

1. A machine for vertical transportation of goods, for instance transportation of packages from a feeding line (15) onto a pallet (17) by the aid of lifting forks (16) mounted to a vertically movable lifting device (2) carried by a vertical guiding structure characterized by

a base frame having a forward end and a rear end;

a wagon (1) horizontally movable on said base frame between a forward terminal stop (10) and a rear terminal stop (6) and carrying a vertical guide structure;

an endless transmission loop element (4) having two horizontal portions extending between forward and rear pulleys fixed at said forward and rear ends of said frame respectively;

one of said horizontal loop portions being branched into two vertical loop portions between a first pulley at the bottom of said guide structure onto and over a second pulley at the top of said guide structure and back to a third pulley at the bottom of said guide structure;

said lifting device (2) being vertically movable on said guide structure between said wagon (1) and an upper stop at the top portion of said vertical guide structure, said lifting forks (16) extending forwardly, the lifting device (2) being fixed to one of said vertical loop portions;

a motor (3) for driving said closed loop element (4) to impart vertical displacement of the lifting device (2) as well as horizontal displacement of the wagon (1) by the intermediary of said closed transmission loop element (4); and

an electrical control system controlling the horizontal and vertical displacements.

2. A machine according to claim 1, characterized in that said motor (3) is an electrically powered motor and that said endless transmission loop element (4) comprises a toothed belt (4), chain or wire.

3. A machine according to claim 2, characterized in that counterweight means (12) are slidingly arranged on said vertical guiding structure and connected to the vertically movable lifting device (2) by a wire or cable element (11), the weight of said counterweight means (12) being chosen somewhat greater than the total weight of the vertically movable lifting device (2) and attached lifting forks (16), the lifting forks (16) then at the returning upward movement due to the weight of said counterweight means (12) firstly moving vertically towards a manually adjustable, mechanical stop (14) located on said vertical guide structure and after hitting the stop continuously moving horizontally towards the feeding line (15).

4. A machine according to claim 3, characterized in that said electrical control system for a cycle of operations only comprises three switches, namely a starting impulse switch (5) starting the operating cycle of the machine when the packages from the feeding line (15) are fed sufficiently far out onto the lifting forks (16), a change-over contact switch (6) reversing the rotational direction of said electrical motor (3) when the lifting forks (16) have reached their bottom position and have completely passed the space between support rolls (13) and said packages thereby have been pushed off onto a pallet (17), said lifting forks (16) further moving vertically upwards and—after hitting said mechanical stop (14)—then horizontally back to the starting position, and a terminal position switch (10) stopping the lifting forks (16) at the starting position near the feeding line (15).

5. A machine according to claim 4, characterized in that at the rear-most part of the machine a vertically adjustable blocking switch (8) is arranged to be contacted by a contact arm (7) fixedly mounted upon the vertically movable lifting device (2) when said devices has reached the predetermined load height of packages as determined by said blocking switch (8).

**Patentansprüche**

1. Maschine zum vertikalen Bewegen von Gütern, beispielsweise Transport von Paketen, von einem Zuführband (15) zu einer Palette (17) mit Hilfe von an einer senkrecht beweglichen, durch senktrechte Führungen gesteuerten Hebevorrichtung (2) angebrachten Hebegabeln (16), gekennzeichnet, durch

einen Grundrahmen mit einem Vorderende und einem Hinterende;

einem Fahrwagen (1), der waagrecht auf dem genannten Grundrahmen zwischen einem vorderen Grenzschalter (10) und einem hinteren Grenzschalter (6) beweglich ist und eine senkrechte Führung aufnimmt;

ein endloses schleifenförmiges Antriebselement (4) mit zwei horizontalen Abschnitten, die sich zwischen vorderen und hinteren Umlenkscheiben erstrecken und am genannten vorderen bzw. hinteren Ende des genannten Grundrahmens angebracht sind;

zwei aus einem der waagrechten Schleifenabschnitte senkrecht abgezweigten Schleifenabschnitten zwischen einer ersten Umlenkscheibe an unteren Teil der senkrechten Führung hinauf zu und über eine zweite Umlenkscheibe am oberen Teil der genannten Führung und zurück zu einer dritten Umlenkscheibe am unteren Teil der genannten Führung;

senkrechte Bewegbarkeit der genannten Hebevorrichtung (2) in der Führung zwischen dem Fahrwagen (1) und einem oberen Anschlag am oberen Teil der senkrechten Führung, wobei die Hebegabeln (16) sich nach vorne erstrecken und die Hebevorrichtung (2) an einer der genannten senkrechten Schleifenabschnitte befestigt ist;

einem Motor (3) zum Antrieb des endlosen schleifenförmigen Antriebselementes (4) zur vertikalen Bewegung der Hebevorrichtung (2) und waagrechten Verschiebung des Wagens (1) unter Zwischenschaltung des schleifenförmigen Antriebselementes (4); und

ein elektrisches Steuersystem zur Steuerung der waagrechten und senkrechten Bewegungen.

2. Maschine nach Anspruch 1, dadurch gekennzeichnet, daß der genannte Motor (3) ein Elektromotor ist und das endlose schleifenförmige Antriebselement (4) ein Zahnriemen (4), eine Kette oder ein Drahtseil ist.

3. Maschine nach Anspruch 2, dadurch gekennzeichnet, daß Gegengewichte (12) gleitend an der senkrechten Führung angebracht und mit der senkrecht bewegbaren Hebevorrichtung (2) durch ein Drahtseil oder Kabelelement (11) verbundet sind, wobei das Gewicht der Gegenewichte (12) etwas höher als das Gesamtgewicht der senkrechte bewegbaren Hebevorrichtung (2) und daran befestigten Hebegabeln (16) ist, daß die Hebegabeln (16) bei den Rückbewegungen nach oben durch das Gewicht der genannten Gegengewichte (12) sich erst senkrecht gegen einen manuell einstellbaren, mechanischen, an der senkrechten Führung vorgesehenen Anschlag (14) bewegen, sowie nach Anstroßen an dem Anschlag sich kontinuierlich waagrecht zum Zuführband (15) hin bewegen.

4. Maschine nach Anspruch 3, dadurch gekennzeichnet, daß das genannte elektrische Steuersystem für einem Arbeitszyklus nur drei Schalter umfaßt, nämlich einem Startimpulsschalter (5), der den Arbeitszyklus der Maschine einschaltet, wenn die zugeführten Verpackungen von der Zuführlinie (15) ausreichend weit auf die Hebegabeln (16) ausgetragen sind, einen Umschaltkontakt (6), der die Drehrichtung des Elektromotors (3) umschaltet, wenn die Hebegabeln (16) ihre untere Endstellung erreicht und ganz den Zwischenraum zwischen Stützrollen (13) und den genannten Verpackungen passiert haben, und die Verpackungen dabei auf eine Lastpalette (17) abschoben wurden, wonach sich die Hebegabeln (16) weiter senkrecht nach oben bewegen und nach Berührung des mechanischen Anschlages (14) dann waagrecht zurück in die Startposition gehen, sowie einen Grenzschalter (10), der die Hebegabeln (16) in Ausgangsstellung in der Nähe des Zuführbandes (15) anhält.

5. Maschine nach Anspruch 4, dadurch gekennzeichnet, daß an hintersten Teil der Maschine ein senkrecht einstellbarer Grenzschalter (8) angebracht ist, der durch einen fest auf den senkrecht beweglichen Hebevorrichtung (2) angebrachten Kontaktarm (7) beaufschlagbar ist, wenn die genannte Vorrichtung die durch den genannten Grenzschalter (8) vorgegebene Ladehöhe an Verpackungen erreicht hat.

**Revendications**

1. Une machine pour un transport vertical d'articles, par exemple un transport d'emballages depuis une ligne de distribution (15) jusque sur une palette (17) à l'aide de fourches de levage (16) montées sur un dispositif de levage (2) mobile verticalement et supporté par une structure de guidage vertical, caractérisée par

un châssis de base comportant une extrémité avant et une extrémité arrière;

un wagon (1) déplaçable horizontalement sur ledit châssis de base entre une butée extrême avant (10) et une butée extrême arrière (6) et portant une structure de guidage vertical;

un élément à boucle de transmission sans fin (4) comportant deux parties horizontales s'étendant entre des poulies avant et arrière fixées respectivement sur lesdites extrémités avant et arrière dudit châssis;

une desdites parties de boucle horizontale étant divisée en deux parties de boucle verticale entre une première poulie placée à la base de ladite structure de guidage sur et au-dessus d'une seconde poulie placée en haut de ladite structure de guidage et revenant sur une troisième poulie placée à la base de ladite structure de guidage;

ledit dispositif de levage (2) étant déplaçable verticalement sur ladite structure de guidage entre ledit wagon (1) et une butée supérieure placée à la partie supérieure de ladite structure de guidage vertical, lesdites fourches de levage (16) s'etendant vers l'avant, le dispositif de levage (2) étant fixé sur une desdites parties de boucle verticale;

un moteur (3) pour entraîner ledit élément à boucle fermée (4) pour produire un déplacement vertical du dispositif de levage (2) ainsi qu'un déplacement horizontal du wagon (1) par l'intermédiaire dudit élément à boucle de transmission fermée (4); et

un système de commande électrique commandant les déplacements horizontaux et verticaux.

2. Une machine selon la revendication 1, caractérisée en ce que ledit moteur (3) est un moteur actionné électriquement et en ce que ledit élément à boucle de transmission sans fin (4) comprend une courroie crantée (4), une chaîne ou un câble.

3. Une machine selon la revendication 2, caractérisée en ce que des contrepoids (12) sont' disposés de façon à glisser sur ladite structure de guidage vertical et sont reliés au dispositif de levage déplaçable verticalement (2) par un fil ou un câble (11), les poids desdits contrepoids (12) étant choisis quelque peu supérieurs au poids total du dispositif de levage mobile verticalement (2) et des fourches de levage (16) fixées sur celuici, les fourches de levage (16) fixées sur celui-ci, les fourches de levage (16), lors du mouvement de retour vers le haut sous l'effet du poids desdits contrepoids (12) se déplaçant d'abord verticalement en direction d'une butée mécanique (14), réglable manuellement et placée sur ladite structure de guidage vertical, puis, après avoir touché la butée, se déplaçant de façon continue horizontalement en direction de la ligne de distribution (15).

4. Une machine selon la revendication 2, caractérisée en ce que ledit système électrique d'une cycle d'opérations comprend seulement trois contacteurs, à savoir un contacteur de démarrage (5) enclenchant le cycle de fonctionnement de la machine quand les emballages provenant de la ligne de distribution (15) sont engagés suffisamment loin sur les fourches de levage (16), un commutateur (6) inversant le sens de rotation dudit moteur électrique (3) quand les fourches de levage (16) ont atteint leur position basse et ont complètement franchi l'espace entre des rouleaux porteurs (13) et lorsque lesdits emballages ont été ainsi poussés jusque sur une palette (17), lesdits fourches de levage (16) se déplaçant en outre verticalement vers le haut et—après avoir touché ladite butée mécanique (14)—revenant ensuite horizontalement dans la position initiale, et un contacteur limiteur (10) arrêtant les fourches de levage (16) dans la position initiale à proximité de la ligne de distribution '(15).

5. Une machine selon la revendication 4, caractérisée en ce qu'il est prévu, dans la partie extrême arrière de la machine, un contacteur de blocage (8) réglable verticalement de manière à être sollicité par un bras de contact (17) fixé sur le dispositif de levage mobile verticalement (2) quand ledit dispositif a atteint la hauteur de chargement prédèterminée d'emballage qui est déterminée par ledit contacteur de blocage (8).

# Fig.1

# Fig.2